# EUROPEAN PATENT SPECIFICATION

(11) **EP 0 546 640 B1**
(45) Date of publication and mention of the grant of the patent: **05.03.1997**
(21) Application number: 92203869.0
(22) Date of filing: 10.12.1992
(51) Int. Cl.: C08F 218/10, C09D 131/02

(54) **Interpolymer-based binders**
Bindemitteln auf Basis von Copolymeren
Liants à base de copolymères

(30) Priority: 13.12.1991 EP 91203300
(43) Date of publication of application: 16.06.1993
(73) Proprietor: SHELL INTERNATIONALE RESEARCH MAATSCHAPPIJ B.V., 2596 HR Den Haag (NL)
(72) Inventor: Andre, Olivier Louis Pierre, B-1348 Ottignies Louvain-la-Neuve (BE); Gerets, Carine Helena Paula, B-1348 Ottignies Louvain-la-Neuve (BE); Scholten, Henricus Paulus Hubertus, B-1348 Ottignies Louvain-la-Neuve (BE)

(56) References cited:
- DE-A- 2 032 647
- GB-A- 1 145 564

## Description

This invention relates to interpolymer-based binders (interpolymers of acrylic acid and comonomers), the process of their preparation, and their uses, in particular their use in aqueous coatings, such as automotive coatings.

For economic and ecological reasons, there is a trend towards aqueous coatings. Particular attention is paid to the development of aqueous topcoats. Such topcoats have to meet increasingly severe requirements in respect of their resistance to alkaline and organic solvents (especially brine and gasoline/diesel), and in respect of their weatherability (resistance towards exposure to ultra-violet light and heat fluctuations as encountered near the bonnet). Furthermore, the binders used for such coatings should have excellent adherence to the primer, readily incorporate colourants, metal particles (metallic lacquers) and other common coating additives, and be easily and adequately applied on the substrate in an ecologically acceptable way. Finally, the applied coating must be hard enough to resist being scratched, but be flexible enough not to scatter upon impact.

Today, several binders are available that will lead to acceptable results, however, each having one or more slight draw-backs. For instance, the styrene/acrylic acid based binders (e.g., International patent application WO 90/00570) are cheap, hydrophobic, but turn yellow in time and have a pigment wetting ability which is just acceptable. The "all-acrylics" binders (e.g., German patent application No. 2,032,647) have excellent flexibility, but are relatively more expensive, are less hydrophobic and as a consequence thereof, have a poor pigment wetting ability, and their coatings are ecologically suspect due to the residual monomer content. Subject of a recently filed patent application (European patent application No. 91201546.8) are binder systems, wherein the styrene in the styrene/acrylic based systems is replaced by the vinylester of a C₉ tertiary saturated monocarboxylic acid ("VeoVa 9", a trademark). These binders are hydrophobic, have a good pigment wetting ability, do not turn yellow upon exposure to light, have excellent alkali and solvent resistance, and have an excellent resistance towards ultra violet light. Nevertheless, topcoats prepared from these binders, despite the aforementioned advantageous properties in combination with outstanding hardness, may still be further improved in respect of their flexibility and costs. Other coating compositions, such as disclosed in British patents 1,145,564 and 1,087,623, are unsuitable in that they use an organic solvent as vehicle and replacement without any adaptation of such organic solvent by an aqueous vehicle gives only unstable solutions and unattractive coating compositions.

It will be appreciated that there is a still growing need for high quality, heat-curable topcoat compositions, which can meet the requirements of the present industrial application. With respect to the automotive industry, where controlled, highly automated standardised coating operations and heat curing (stoving) operations are common, which operations should be carried out in a relatively short and reproducible fashion, relatively cheap and easily prepared topcoat compositions are highly desired.

More particularly, due to the ever increasing environmental concern, there is a still growing need for aqueous automotive coatings and more particularly heat curable, automotive topcoats which fulfil the aforementioned requirements, in particular in respect of the balance of hardness and flexibility without the loss of any of the other properties.

For such heat curing automotive topcoats the use of any surfactant to disperse the interpolymer and relatively large amounts of ethylenically unsaturated acid comonomer, must be avoided, as it will deteriorate the properties of the final film.

Therefore, it is an object of the present invention to provide interpolymers having both the aforementioned properties in combination with an excellent water dispersability.

As a result of extensive research and experimentation this aim could surprisingly be reached by providing a hydroxyl groups and carboxyl groups containing interpolymer, obtainable by radical solution polymerization at a temperature in the range of from 110 to 150 °C, in an inert, water-miscible organic solvent system, of:
(a) hydroxyalkyl esters of ethylenically unsaturated acids, in particular those esters wherein the acid moiety contains from 2 to 9 carbon atoms, and wherein the hydroxyalkyl moiety contains from 2 to 6 carbon atoms and preferably 2 to 4 carbon atoms in an amount of from 4 to 20 %wt, calculated relative to the weight of the complete monomer mixture;
(b) an ethylenically unsaturated acid, in particular such as specified hereinafter, in an amount of from 3 to 20 %wt, calculated relative to the weight of the complete monomer mixture;
(c) alkyl esters of ethylenically unsaturated acids, in particular esters of ethylenically unsaturated acids such as specified hereinafter, the alkyl group of which may contain from 4 to 8 carbon atoms and preferably 4 to 6 carbon atoms, in an amount of from 10 to 40 %wt, calculated relative to the weight of the complete monomer mixture;
(d) the vinyl ester of a branched saturated monocarboxylic acid, containing in the acid moiety 10 carbon atoms, in an amount of from 10 to 60 %wt, calculated relative to the weight of the complete monomer mixture; and
(e) alkyl esters of methacrylic acid and/or acrylic acid, wherein the alkyl group contains from 1 to 3 carbon atoms and preferably represents a methyl group, in an amount of from 15 to 50 %wt, calculated relative to the weight of the complete monomer mixture;
the sum of the respective amounts of components being 100%.

Suitable examples of ethylenically unsaturated acids containing from 2 to 9 carbon atoms are methacrylic acid, acrylic acid, crotonic acid, isocrotonic acid, ethacrylic acid, phenylacrylic acid, maleic acid, fumaric acid, itaconic acid and citraconic acid.

Suitable examples of hydroxyalkyl esters of ethylenically unsaturated acids contain primary or secondary hydroxyl groups, such as hydroxyethyl acrylate, hydroxypropyl acrylate, hydroxybutyl acrylate, hydroxyamyl acrylate, hydroxyhexyl acrylate, hydroxyoctyl acrylate and the corresponding methacrylates, crotonates, isocrotonates, maleates and fumarates, and 2-hydroxypropyl acrylate, 2-hydroxybutyl acrylate, 3-hydroxybutyl acrylate and the corresponding methacrylates, crotonates, isocrotonates, maleate and fumarates.

Suitable examples of lower alkyl esters of ethylenically unsaturated acids (component e) are methyl (meth)acrylate, ethyl (meth)acrylate, propyl (meth)acrylate, isopropyl (meth)acrylate.

Preferred comonomer component (a) is selected from hydroxyethyl esters of the hereinbefore specified ethylenically unsaturated acids and the most preferred comonomers are hydroxyethyl methacrylate ("HEMA") or hydroxyethyl acrylate ("HEA").

Preferred comonomer component (b) is selected from acrylic acid ("AA") and/or methacrylic acid.

Preferred comonomer component (c) is selected from n-butyl esters, iso-butyl esters, n-pentyl esters, isopentyl esters or n-hexyl esters of the hereinbefore specified acids and the most preferred comonomers are n-butyl esters of acrylic acid ("NBA") and/or methacrylic acid.

As comonomer component (d) preferably solely a vinyl ester of a C₁₀ saturated tertiary monocarboxylic acid, such as sold under "VeoVa 10" (VeoVa is a trademark) is used.

Preferred comonomer component (e) is selected from methyl acrylate, methyl methacrylate ("MMA"), ethyl acrylate or ethyl methacrylate.

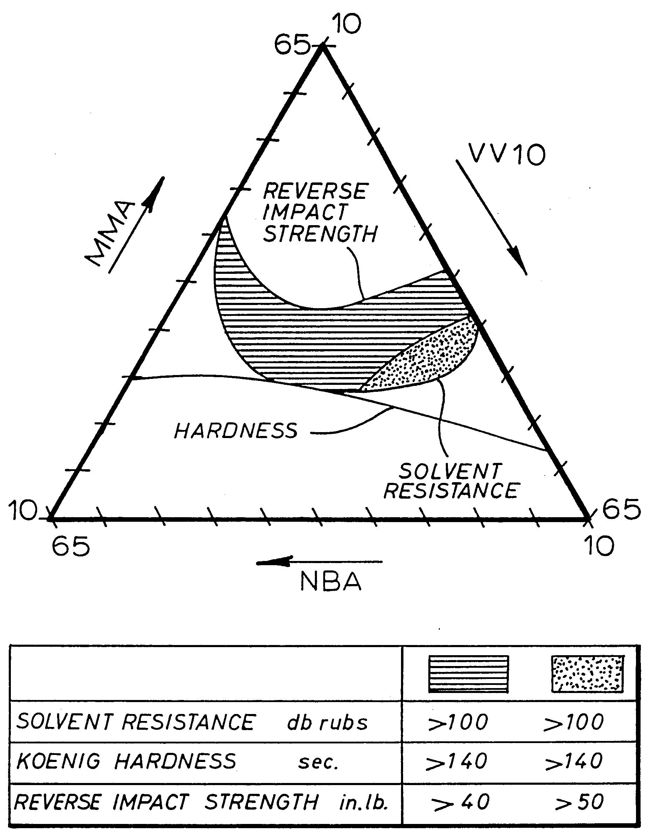

In more preferred comonomer starting mixture, the amounts of hydroxyalkyl esters of ethylenically unsaturated acid (component (a)) and of ethylenically unsaturated acid (component (b)) are set in the range of from 8-11 and preferably at 9 %wt and in the range of from 4 to 8 and preferably at 6 %wt respectively, whereas the amounts of the components (c), (d) and (e) may vary within the ranges specified in figure 1.

It is observed that figure 1 is a superimposition of three regression lines Y₃, Y₄, and Y₅ indicating the compositions containing a given amount of the component (c), (d) and (e) that meet the requirements in respect of: the König hardness of the film in sec., as defined hereinafter (Y₃), having a value of at least 140; the flexibility in 0.0115 kg.m (inch.lb), to be defined hereinafter (Y₄) and having a value of at least 40; and the methyl ethyl ketone resistance in db. rub. to be defined hereinafter (Y₅) and having a value of at least 100. In addition by meeting these requirements, simultaneously the requirements in respect of the properties storage stability of the aqueous interpolymer suspension in days as defined hereinafter (Y1) and having a value of at least 42; the conversion degree in %wt (Y₂) being at least 99.5 %wt are met.

The indicated minimum values of Y₁-Y₅ relate to requirements made as to the most excellent automotive topcoating characteristics. The equations of the regression lines are the following:
(i) Y₃ = 62 X₁ - 60 X₂ + 134 X₃ + 265 X₁.X₂ + 728 X₁.X₃ + 946 X₂.X₃ - 1924 X₁.X₂.X₃;
(ii) Y₄ = 348 X₁ + 56 X₂ - 10 X₃ - 765 X₁.X₂ - 640 X₁.X₃ + 187 X₂.X₃ + 1372 X₁.X₂.X₃;
(iii) Y₅ = -30 X₁ + 38 X₂ + 335 X₃ - 275 X₁.X₂ + 22 X₁.X₃ - 837 X₂.X₃ + 4735 X₁.X₂.X₃;
wherein X₁ represents the weight fraction of component (d), preferably being VeoVa 10; X₂ represents the weight fraction of component (c), preferably being butylacrylate; X₃ represents the weight fraction of component (e), preferably being methyl methacrylate.

The most preferred comonomer starting compositions are those comprising:
(a) from 4 to 13 %wt hydroxyethylacrylate,
(b) from 4 to 11 %wt acrylic acid,
(c) from 10 to 15 %wt butyl acrylate,
(d) from 40 to 43 %wt VeoVa 10, and
(e) from 30 to 35 %wt methyl methacrylate, the total amounting to 100%.

The "storage stability" as used for Y₁ is measured at 40 °C. To obtain an indication of interpolymer suspension storage stability, an accelerated test is carried out at 40 °C on a sample of about 100 ml. Viscosity, pH and settlement of solids are noted after various periods of time e.g. 1, 2, 4 and 8 weeks. After 6 weeks the suspension is only allowed to show slight settlement of solids which solids can be easily redispersed, whereas no change in overall viscosity may occur.

The "MEK rubs" is the number of double rubs given by hand to the cured coating with a cloth wetted with methyl ethyl ketone until the coating was wiped off. "MEK rubs" greater than 100 is an indication of a good cure and solvent resistance.

The "flexibility" or impact strength is measured as reverse impact strength determined according to the British Standard Falling Ball test.

The conversion degree is determined by residual monomer measurement by GLC procedure which measures residual monomers separately by using standard calibration of the analysis equipment for each monomer to be included in the comonomer starting mixture.

The analysis should be carried out shortly after preparation of interpolymer suspension and before adjustment, if any, of pH.

Using this GLC method residual monomer concentrations down to at least 0.1 %wt (free monomer based on interpolymer mass) can be measured separately for the respective monomers.

The method makes use of a gas chromatograph equipped as described in principle in Shell Resins, VeoVa Technical Manual VM 2.1 "Principles of design and manufacture of VeoVa latices", issued June 1988, pages 24 and 25. The monomer content is calculated as defined on page 26 of this Technical Manual.

The hardness of the film Y₃ is measured as König hardness, determined using an Erichson (trademark) apparatus.

The "film thickness" as indicated throughout the present specification was determined with a Permascope ES (trademark) of Fisher.

The viscosity values as indicated throughout the present specification were determined using a Brookfield (trademark) viscosimeter at a temperature of 23 °C.

The present interpolymers may be prepared by radical solution polymerisation of the monomer components (a) to (e) at a temperature in the range of from 110 to 150 °C in an inert, water miscible organic solvent for which several organic solvents types may be used, such as glycol ethers, esters, and alcohols or mixtures thereof.

Examples of suitable solvents are: relatively high boiling alcohols, such as n-hexanol, 2-ethyl hexanol, isooctyl alcohol, isononyl alcohol, isodecyl alcohol, isotridecyl alcohol, cyclohexanol, methylcyclohexanol, tetrahydrofuryl alcohol, diacetone alcohol, 2,6-dimethyl-4-heptanol, 4-methyl-2-pentanol, tridecanol, glycols and glycol derivatives, such as ethyleneglycol, 1,2-propyleneglycol, 1,3-butyleneglycol, butanediol-1,4, hexyleneglycol, 2-ethylhexanediol-1,3, diethyleneglycol, triethyleneglycol, dipropyleneglycol, trihydroxymethyl propane and ethoxylated or ether derivatives thereof.

A preferred class of solvents to be used for said radical solution polymerization are diols and those according to the formulae: 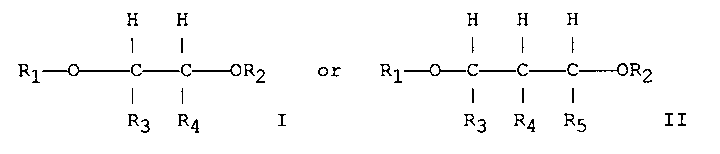 wherein R₁ and R₂ each may independently represent hydrogen or lower alkyl group having from 2 to 6 carbon atoms and preferably from 3 to 4 carbon atoms, under the proviso that at most one of R₁ and R₂ may represent hydrogen, and wherein R₃, R₄ and R₅ each may independently represent hydrogen, hydroxyl or ethoxylated hydroxyl, or lower alkyl as specified hereinbefore, under the proviso that at most one of the symbols R₃, R₄ and R₅ may represent hydroxyl, ethoxylated hydroxyl, or propoxylated hydroxyl.

The most preferred class of solvents are those according to the formulae I or II wherein R₃, R₄ and R₅ are hydrogen and wherein R₁ or R₂ is lower alkyl.

As most preferred solvent "BUTYLOXITOL" (ethylene glycol mono-n-butylether; both BUTYLOXITOL and OXITOL are registered trademarks) is used.

The solvent is used in an amount of from 10 to 20 %wt of the total weight of the monomers and preferably in an amount of from 12 to 17 %wt.

In general the radical solution polymerization is carried out by starting with an initial reactor charge of the solvent in the indicated amount and therein dissolved an amount of from 5 to 15 %wt of the total amount of the VeoVa (tm) and from 1 to 8 %wt of the total amount of the ethylenically unsaturated acids and esters thereof.

According to a preferred embodiment amounts of 10 %wt of VeoVa (tm) and 0 to 10% of the total amount of (meth)acrylates and (meth)acrylic acids are used. To this initial reactor charge, heated up to the desired reaction temperature, which is maintained at the same value during the further addition, the remaining VeoVa (tm) and ethylenically unsaturated acids and esters, as specified hereinbefore, and an amount of initiator of from 1 to 5 %wt and preferably of from 2 to 4.5%wt, calculated relative to the total weight of the monomers, are gradually added within a period of from 3 to 5 hours and preferably of from 3.5 to 4.5 hours, followed by a post reaction during from 1 to 3 hours and preferably of 2 hours, after optional addition of an additional smaller proportion of the total initiator amount.

As initiator for the radical polymerization a great variety of organic peroxide compounds can be used such as dibenzoylperoxide, dicumylperoxide, cumylhydroperoxide, di-t-butylperoxide, t-butylperoxybenzoate, t-butylhydroperoxide, 2,2-di-t-butylperoxybutane, t-amylperbenzoate, 1,3-bis(t-butylperoxyisopropyl)benzene, diisopropylbenzene monohydroperoxide and diacylperoxide, such as diacetylperoxide; peroxyketal, such as 2,2-di(t-amylperoxy)propane, t-amylperoxy-2-ethylhexanoate and ethyl-3,3-di(t-amylperoxy)butyrate or aliphatic azo compounds such as azobiscyclohexane nitrile.

As preferred initiator is used t-butylperoxybenzoate (Trigonox C, a trademark) in an amount of from 2 to 4.5%wt, calculated relative to the total weight of monomers.

It will be appreciated that, if necessary, the radical solution polymerization can be carried out in the presence of a small amount of polymerization regulators, such as mercapto compounds and preferably mercapto ethanol, and alkyl mercaptanes, such as t-dodecyl mercaptane, octyl mercaptane, phenyl mercaptane, octyldecyl mercaptane, butyl mercaptane; thiocarboxylic acids such as thioacetic acid or thiolactic acid. These regulators can be applied, if necessary, in an amount of up to 2 %wt, calculated relative to the complete weight of the comonomers.

Preferably said regulators are dissolved in the monomer mixture to be gradually added and the concentration of them is kept constant during the polymerization time period.

After substantial completion of the polymerization reaction, the reaction mixture is neutralized with an organic base and homogenized, and water is added to the organic phase in a volume of from 10 to 1 times the organic phase volume and preferably of from 5 to 1.5 times the organic phase volume, whereupon a homogeneous, stable aqueous interpolymer dispersion is obtained.

Alternatively, the organic base may be dissolved in water, and the reaction mixture may be added to the aqueous organic base solution, whereupon again a stable aqueous interpolymer dispersion is obtained.

The neutralization of the carboxyl groups of the initially prepared interpolymers can be carried out by using organic amines such as aminomethylpropanol, aminomethylbutanol, dimethylethanolamine, diethylethanolamine, triethanolamine, monoisopropanolamine, diisopropanolamine, triisopropanolamine, 2-dimethylamino-2-methyl-1-propanol, of which the environmental friendly ones are preferred.

It will be appreciated that another aspect of the present invention is formed by curable aqueous coating compositions derivable from the hereinbefore specified aqueous interpolymer compositions.

These curable aqueous coating compositions may be prepared from the initially prepared aqueous interpolymer compositions, to which curing agents or cross-linking agents are added. Such curing or cross-linking agents may be selected from aminoplast resins, polyisocyanates or anhydride groups containing compounds.

Said curing agents are added in such an amount, that the molar ratio between the hydroxyl groups occurring in the interpolymer and the reactive groups of the curing agent is in the range of from 0.3:1 to 3:1.

Attractive curing or cross-linking resins for curable coating systems are for example those disclosed in European patent applications Nos. 244,897 and 281,213.

Particularly suitable cross-linking agents are the ambient curing reactive isocyanates and thiols, as well as the high temperature curing aminoplast-type resins, such as alkoxylated reaction products of formaldehyde with melamine or benzoguanamide.

Other suitable cross-linking agents include urea-aldehyde resins, phenol-aldehyde resins, bisphenolic or anhydride curing agents, polycarboxylic compounds, dicyandiamide and blocked polyisocyanates.

When some types of these cross-linking agents are used, catalysts may be added to the curable coating compositions to reach curing at lower stoving temperatures. Suitable catalysts which may be employed in the curable coating compositions for this purpose are acids such as orthophosphoric acid or p-toluenesulphonic acid. These catalysts may be used in an amount in the range of from e.g. 0.05 to 2 %wt, calculated as pure catalyst relative to the interpolymer and cross-linking agent.

The relative weight proportion of the interpolymer resin relative to the weight of interpolymer and curing agent is typically of from 5 to 50 %wt, calculated relative to the total weight of the interpolymer and curing agent. For the most preferred curable aqueous coating compositions the weight proportion of the curing agent, such as hexamethoxymethyl melamine (Cymel 301, a trademark) is from 10 to 30 %wt and most preferably from 13 to 17 %wt.

The curable coating compositions according to the present invention can be applied by a variety of methods known in the art, for example by spraying, electrodeposition, dipping or brush- or roller coating. Pigments, fillers, dispersing agents and other components known for coating formulations may be added to the curable binder system comprising the interpolymers according to the present invention.

Such curable coating compositions show, after application, preferably by spraying and baking, excellent properties and more particularly when applied as automotive topcoats. Baking will comprise a flash-off step during from 1 to 10 minutes at a temperature of from 60 to 80 °C, and preferably at 70 °C, followed by a curing step of from 5 to 60 minutes and preferably from 20 to 40 minutes and at a temperature of from 100 to 200 °C and preferably of from 120 to 160 °C. Most preferably the flash-off step will be carried out at 70 °C during 5 minutes and the curing step will be carried out at 140 °C during 30 minutes.

It will be appreciated that another aspect of the present invention is formed by a process for the preparation of the aforementioned interpolymers and of curable aqueous coating compositions, by:
(1) starting with an initial reactor charge of the solvent in an amount of from 10 to 20 %wt of the total weight of the monomers, wherein has been dissolved an amount of from 0 to 15 %wt of the total amount of component (d), and from 0 to 10 %wt of the total amount of each of the components (a), (b), (c) and (e);
(2) heating the reactor charge to the desired reaction temperature; and,
(3) at this substantially constant temperature, gradually adding the remaining monomers and an amount of initiator of from 1 to 5 %wt and preferably from 2 to 4.5%wt, calculated relative to the total weight of the monomers, within a period from 3 to 5 hours and preferably from 3.5 to 4.5 hours, followed by a post reaction during from 1 to 3 hours and preferably 2 hours.

The process for the preparation of curable aqueous coating compositions according to the present invention comprises:
(1) preparing the interpolymers according to present invention;
(2) neutralizing the reaction mixture after substantial completion of the reaction with a base and preferably an organic base;
(3) homogenising and adding water to the organic phase in a volume of from 10 to 1 times the organic phase volume and preferably of from 5 to 1.5 times the organic phase volume; and
(4) mixing the obtained homogeneous stable aqueous interpolymer suspension with a curing or cross-linking agent in an amount, such that the molar ratio between the hydroxyl groups occurring in the interpolymer and the reactive groups of the curing agent is in the range of from 0.3:1 to 3:1 and/or the relative weight proportion of the interpolymer is in the range of from 5 to 50 %wt and preferably from 10 to 20 %wt and more preferably from 13 to 17 %wt.

The invention is illustrated by the following examples, however, without restricting its scope to these preferred specific embodiments.

### Example 1

Several interpolymer compositions were prepared (experiments 1-4) in a 1-litre glass reactor, equipped with a thermocouple, a condenser, a stainless steel stirrer and a nitrogen inlet, starting from varying weight proportions of the hereinafter specified comonomers. BUTYLOXITOL (tm) was charged to the reactor and heated to 130 °C, at which point the comonomer mixture and 2% m/m on the monomers of the initiator t-butylperoxybenzoate (Trigonox C, a tm) were added regularly over a period of 4 hours with the aid of a pump. After the addition period, 0.75% m/m on monomers of the initiator was added and the solution temperature is kept at 130 °C for 2 hours. After the period the reactor content is cooled down to room temperature. The respective weight proportions of the comonomers in the total comonomer intake are listed hereinafter in Table I.

### Comparative Example 2

About the same procedure as described in Example 1 was followed (comparative exp. A-E) with the difference that either a comonomer mixture was used, the amount of ingredients of which was not in accordance with the invention, or the comonomer mixture comprised VeoVa 9 (tm) instead of VeoVa 10 (tm) (cf. European patent application No. 91201546.8).

### Aqueous binder preparation

Aqueous dispersions of the resulting interpolymers were prepared by neutralization of the same with aminomethylpropanol (AMP). The AMP was carefully added and slowly mixed for 30 minutes. Water was then added to obtain a dispersion having a viscosity of about 100 mPa.s (a final solids content of 20-30 %wt).

The stability of the aqueous dispersions were assessed by visually observing any phase separation and by regularly measuring the pH and the viscosity upon storage at 40 °C. Both the comparative experiments as the inventive experiments passed the minimum requirement.

### Coating compositions

From the above aqueous dispersions coating compositions were prepared by mixing 20.0 g of interpolymer, 3.5 g of hexamethoxymethylmelamine (Cymel 301, a tm), i.e., in a weight ratio of 85/15, and 0.07 g of p-toluenesulphonic acid. These coating compositions contained about 10 %wt of initially applied solvent. The coating composition of experiment 3, however, is based on a weight ratio of interpolymer/Cymel 301 (tm) of 85/15 (exp. 3a) and 70/30 (exp. 3b).

### Stoving

Some relevant interpolymer properties and film properties of the cured coating films were assessed by applying the coating compositions onto bare steel panels by a barcoater in a dry film thickness of 20 µm, followed by a flash-off at 70 °C for 5 minutes and a stoving at 140 °C for 30 minutes. The properties are listed in Table II. As to cured coating film properties, the coating film was applied after at least three days from the preparation of the curable coating composition.

**Table I**

| Total comonomer compositions | | | | | |
|---|---|---|---|---|---|
| Experiments | hydroxyethyl acrylate % m/m | acrylic acid % m/m | n-butyl acrylate % m/m | VeoVa 10* % m/m | methyl methacrylate % m/m |
| A | 9 | 6 | 10 | 10 | 65 |
| B | 9 | 6 | 65 | 10 | 10 |
| C | 9 | 6 | 10 | 65 | 10 |
| 1 | 9 | 6 | 10 | 37.5 | 37.5 |
| 2 | 9 | 6 | 28.33 | 28.33 | 28.33 |
| 3 | 3 | 9 | 32.1 | 28.3 | 27.6 |
| 4 | 9 | 9 | 28.0 | 28.3 | 25.7 |

| | | | | VeoVa 9* | |
|---|---|---|---|---|---|
| E | 9 | 6 | 28.33 | 28.33 | 28.33 |
| D | 9 | 6 | 37.5 | 23.75 | 23.75 |

| | | | | | |
|---|---|---|---|---|---|
| * (tm) | | | | | |

**Table II**

| Experiments | Conversion % wt | Thickness µm | Hardness sec | Flexibility kg.m (inch.lb) | Solvent MEK db rubs. |
|---|---|---|---|---|---|
| A | 99.5 | 20 | 186 | 0.07(6) | >100 |
| B | 99.7 | 20 | 54 | 0.40(35) | 15 |
| C | 99.8 | 20 | 109 | 1.73(150) | 25 |
| 1 | 99.7 | 20 | 188 | 0.46(40) | >100 |
| 2 | 99.7 | 20 | 150 | 0.52(45) | >100 |
| 3a | 99.5 | 20 | 110 | 0.75(65) | >100 |
| 3b | 99.5 | 20 | 145 | 0.58(50) | >100 |
| 4 | 99.7 | 20 | 160 | 0.46(40) | >100 |
| D | 99.6 | 21 | 162 | 0.35(30) | 100 |
| E | 99.5 | 21 | 139 | 0.58(50) | 90 |

From Table II it can be clearly seen that the coatings prepared from aqueous dispersions in accordance with the invention have a better balance of properties than the best results of European patent application No. 91201546.8 using VeoVa 9 (tm).

## Claims

1. Hydroxyl groups and carboxyl groups containing interpolymers, obtainable by radical solution polymerization at a temperature in the range of from 110 to 150 °C in an inert, water miscible organic solvent system, of:
(a) hydroxyalkyl esters of ethylenically unsaturated acids, wherein the hydroxyalkyl moiety contains from 2 to 6 carbon atoms in an amount of from 4 to 20 %wt, calculated relative to the weight of the complete monomer mixture;
(b) an ethylenically unsaturated acid, in an amount of from 3 to 20 %wt, calculated relative to the weight of the complete monomer mixture;
(c) alkyl esters of ethylenically unsaturated acids, the alkyl group of which may contain from 4 to 8 carbon atoms, in an amount of from 10 to 40 %wt, calculated relative to the weight of the complete monomer mixture;
(d) the vinyl ester of a branched saturated monocarboxylic acid, containing in the acid moiety 10 carbon atoms, in an amount of from 10 to 60 %wt, calculated relative to the weight of the complete monomer mixture; and
(e) alkyl esters of methacrylic acid and/or acrylic acid, wherein the alkyl group contains from 1 to 3 carbon atoms, in an amount of from 15 to 50 %wt, calculated relative to the weight of the complete monomer mixture;
the sum of the respective amounts of monomer components being 100%.

2. Interpolymers according to claim 1, characterized in that component (a) is hydroxyethyl (meth)acrylate.

3. Interpolymers according to claim 1, characterized in that component (b) is acrylic acid and/or methacrylic acid.

4. Interpolymers according to claim 1, characterized in that as component (c) n-butyl esters of acrylic acid and/or methacrylic acid are used.

5. Interpolymers according to claim 1, characterized in that as component (d) a C₁₀ saturated tertiary monocarboxylic acid is used.

6. Interpolymers according to claim 1, characterized in that component (e) is selected from methyl acrylate, methyl methacrylate, ethyl acrylate and ethyl methacrylate.

7. Interpolymers according to claim 1, characterized in that the amounts of hydroxyalkyl esters of ethylenically unsaturated acid (component (a)) and of ethylenically unsaturated acid (component (b)) are set in the range of from 8-11 %wt and preferably at about 9 %wt and in the range of from 4 to 8 %wt and preferably at about 6 %wt respectively, whereas the amounts of the components (c), (d) and (e) may vary within the hereinbefore specified ranges while simultaneously fulfilling the following equations:
(i) Y₃ = 62 X₁ - 60 X₂ + 134 X₃ + 265 X₁.X₂ + 728 X₁.X₃ + 946 X₂.X₃ - 1924 X₁.X₂.X₃;
(ii) Y₄ = 348 X₁ + 56 X₂ - 10 X₃ - 765 X₁.X₂ - 640 X₁.X₃ + 187 X₂.X₃ + 1372 X₁.X₂.X₃;
(iii) Y₅ = -30 X₁ + 38 X₂ + 335 X₃ - 275 X₁.X₂ + 22 X₁.X₃ - 837 X₂.X₃ + 4735 X₁.X₂.X₃;
wherein X₁ represents the weight fraction of component (d), preferably being VeoVa 10 (tm), (tm); X₂ represents the weight fraction of component (c), preferably being butylacrylate; X₃ represents the weight fraction of component (e), preferably being methyl methacrylate; and wherein Y₁ represents the storage stability of the aqueous interpolymer suspension in days and having a value of at least 42; Y₂ represents the conversion degree in %wt being at least 99.5%; Y₃ represents the König hardness of the film in sec., having a value of at least 140; Y₄ represents the flexibility in 0.0115 kg.m (inch.lb.) and having a value of at least 25; and Y₅ represents the methyl ethyl ketone resistance in db. rub. and having a value of at least 100.

8. Interpolymers according to claim 1, characterized in that they are derivable from comonomer compositions comprising:
(a) from 4 to 13 %wt hydroxyethylacrylate,
(b) from 4 to 11 %wt acrylic acid,
(c) from 10 to 15 %wt butyl acrylate,
(d) from 40 to 45 %wt VeoVa 10, and
(e) from 30 to 35 %wt methyl methacrylate, the total amounting to 100%.

9. A process for preparing interpolymers according to anyone of claims 1 to 8, comprising radical solution polymerizing the monomer components (a) to (e) at a temperature in the range of from 110 to 150 °C in an inert, water miscible organic solvent system.

10. A process according to claim 9, comprising: (1) starting with an initial reactor charge of the solvent in an amount of from 10 to 20 %wt of the total weight of the monomer components, wherein has been dissolved an amount of from 0 to 15 %wt of the total amount of component (d), and from 0 to 10 %wt of the total amount of each of the monomer components (a), (b), (c) and (e); (2) heating the reactor charge to the desired reaction temperature; and, (3) at this substantially constant temperature, gradually adding the remaining monomer components and an amount of initiator of from 1 to 5 %wt and preferably from 2 to 4.5 %wt, calculated relative to the total weight of the components, within a period from 3 to 5 hours and preferably from 3.5 to 4.5 hours, followed by a post reaction during from 1 to 3 hours and preferably 2 hours.

11. The use of interpolymers according to claims 1 to 8 in curable aqueous coating compositions containing a curing agent or cross-linking agent, and in cured coating compositions obtained upon heat-curing the curable aqueous coating compositions.

## Patentansprüche

1. Hydroxylgruppen und Carboxylgruppen enthaltende Mischpolymerisate, erhältlich durch radikalische Lösungspolymerisation von
(a) Hydroxyalkylestern von ethylenisch ungesättigten Säuren, in denen die Hydroxyalkylgruppierung 2 bis 6 Kohlenstoffatome enthält, in einer Menge von 4 bis 20 Gew.-%, bezogen auf das Gewicht des gesamten Monomerengemischs;
(b) einer ethylenisch ungesättigten Säure in einer Menge von 3 bis 20 Gew.-%, bezogen auf das Gewicht des gesamten Monomerengemischs;
(c) Alkylestern von ethylenisch ungesättigten Säuren, deren Alkylgruppe 4 bis 8 Kohlenstoffatome enthalten kann, in einer Menge von 10 bis 40 Gew.-%, bezogen auf das Gewicht des gesamten Monomerengemischs;
(d) dem Vinylester einer verzweigten gesättigten Monocarbonsäure, die in der Säuregruppierung 10 Kohlenstoffatome enthält, in einer Menge von 10 bis 60 Gew.-%, bezogen auf das Gewicht des gesamten Monomerengemischs; und
(e) Alkylestern der Methacrylsäure und/oder Acrylsäure, in denen die Alkylgruppe 1 bis 3 Kohlenstoffatome enthält, in einer Menge von 15 bis 50 Gew.-%, bezogen auf das Gewicht des gesamten Monomerengemischs;
wobei sich die Summe der jeweiligen Mengen der Monomerkomponenten auf 100% beläuft,
bei einer Temperatur im Bereich von 110°C bis 150°C in einem inerten, mit Wasser mischbaren organischen Lösungsmittelsystem.

2. Mischpolymerisate nach Anspruch 1, dadurch gekennzeichnet, daß es sich bei der Komponente (a) um Hydroxyethyl(meth)acrylat handelt.

3. Mischpolymerisate nach Anspruch 1, dadurch gekennzeichnet, daß es sich bei der Komponente (b) um Acrylsäure und/oder Methacrylsäure handelt.

4. Mischpolymerisate nach Anspruch 1, dadurch gekennzeichnet, daß man als Komponente (c) n-Butylester der Acrylsäure und/oder Methacrylsäure verwendet.

5. Mischpolymerisate nach Anspruch 1, dadurch gekennzeichnet, daß man als Komponente (d) eine gesättigte tertiäre C₁₀-Monocarbonsäure verwendet.

6. Mischpolymerisate nach Anspruch 1, dadurch gekennzeichnet, daß man die Komponente (e) unter Methylacrylat, Methylmethacrylat, Ethylacrylat und Ethylmethacrylat auswählt.

7. Mischpolymerisate nach Anspruch 1, dadurch gekennzeichnet, daß man die Mengen an Hydroxyalkylestern von ethylenisch ungesättigter Säure (Komponente (a)) und ethylenisch ungesättigter Säure (Komponente (b)) im Bereich von 8-11 Gew.-% und bevorzugt auf etwa 9 Gew.-% bzw. im Bereich von 4 bis 8 Gew.-% und bevorzugt auf etwa 6 Gew.-% einstellt, wohingegen die Mengen der Komponenten (c), (d) und (e) in den obenangegebenen Bereichen variieren können, wobei sie gleichzeitig die folgenden Gleichungen erfüllen:
(i) Y₃ = 62 X₁ - 60 X₂ + 134 X₃ + 265 X₁.X₂ + 728 X₁.X₃ + 946 X₂.X₃ - 1924 X₁.X₂.X₃;
(ii) Y₄ = 348 X₁ + 56 X₂ - 10 X₃ - 765 X₁.X₂ - 640 X₁.X₃ + 187 X₂.X₃ + 1372 X₁.X₂.X₃;
(iii) Y₄ = -30 X₁ + 38 X₂ + 335 X₃ - 275 X₁.X₂ + 22 X₁.X₃ - 837 X₂.X₃ + 4735 X₁.X₂.X₃;
worin X₁ den Gewichtsanteil der Komponente (d), bei der es sich bevorzugt um VeoVa 10 (Wz.) handelt; X₂ den Gewichtsanteil der Komponente (c), bei der es sich bevorzugt um Butylacrylat handelt; X₃ den Gewichtsanteil der Komponente (e), bei der es sich bevorzugt um Methylmethacrylat handelt; und Y₁ die Lagerstabilität der wäßrigen Mischpolymerisatsuspension in Tagen mit einem Wert von mindestens 42; Y₂ den Umsatz in Gew.-% von mindestens 99,5 Gew.-%; Y₃ die König-Härte des Films in s mit einem Wert von mindestens 140; Y₄ die Flexibilität in 0,0115 kg.m (Zoll.lb) mit einem Wert von mindestens 25 und Y₅ die Methylethylketonbeständigkeit in Doppelhüben mit einem Wert von mindestens 100 bedeuten.

8. Mischpolymerisate nach Anspruch 1, dadurch gekennzeichnet, daß sie sich von Comonomerzusammensetzungen, enthaltend
(a) 4 bis 13 Gew.-% Hydroxyethylacrylat,
(b) 4 bis 11 Gew.-% Acrylsäure,
(c) 10 bis 15 Gew.-% Butylacrylat,
(d) 40 bis 45 Gew.-% VeoVa 10 und
(e) 30 bis 35 Gew.-% Methylmethacrylat, wobei sich die Gesamtsumme auf 100% beläuft,
ableiten lassen.

9. Verfahren zur Herstellung von Mischpolymerisaten nach einem der Ansprüche 1 bis 8, bei dem man die Monomerkomponenten (a) bis (e) bei einer Temperatur im Bereich von 110 bis 150°C in einem inerten, mit Wasser mischbaren organischen Lösungsmittelsystem radikalisch lösungspolymerisiert.

10. Verfahren nach Anspruch 9, bei dem man (1) zunächst in einem Reaktor das Lösungsmittel in einer Menge von 10 bis 20 Gew.-% des Gesamtgewichts der Monomerkomponenten, in dem eine Menge von 0 bis 15 Gew.-% der Gesamtmenge der Komponente (d) und jeweils 0 bis 10 Gew.-% der Gesamtmenge der Monomerkomponenten (a), (b), (c) und (e) gelöst sind, vorlegt; (2) die Reaktorvorlage auf die gewünschte Reaktionstemperatur erhitzt und (3) bei dieser im wesentlichen konstanten Temperatur die verbleibenden Monomerkomponenten und eine Initiatormenge von 1 bis 5 Gew.-% und bevorzugt 2 bis 4,5 Gew.-%, bezogen auf das Gesamtgewicht der Komponenten, innerhalb eines Zeitraums von 3 bis 5 Stunden und bevorzugt 3,5 bis 4,5 Stunden allmählich zugibt und danach 1 bis 3 Stunden und bevorzugt 2 Stunden nachreagieren läßt.

11. Verwendung der Mischpolymerisate nach einem der Ansprüche 1 bis 8 in härtbaren wäßrigen Beschichtungszusammensetzungen, enthaltend ein Härtungsmittel oder ein Vernetzungsmittel, und in durch Hitzehärtung der härtbaren wäßrigen Beschichtungszusammensetzungen erhaltenen gehärteten Beschichtungszusammensetzungen.

## Revendications

1. Interpolymères contenant des radicaux hydroxyle et des radicaux carboxyle, obtenus par la polymérisation en solution radicalaire à une température qui fluctue de 110°C à 150°C dans un système à solvant organique miscible à l'eau, inerte, constitué :
(a) d'esters hydroxyalkyliques d'acides à insaturation éthylénique, dans lesquels le groupement hydroxyalkyle contient de 2 à 6 atomes de carbone, en une proportion de 4 à 20% en poids, calculés par rapport au poids du mélange des monomères complet;
(b) d'un acide à insaturation éthylénique, en une proportion de 3 à 20% en poids, calculés par rapport au poids du mélange des monomères complet;
(c) d'esters alkyliques d'acides à insaturation éthylénique, dont le radical alkyle peut contenir de 4 à 8 atomes de carbone, en une proportion de 10 à 40% en poids, calculés par rapport au poids du mélange des monomères complet;
(d) de l'ester vinylique d'un acide monocarboxylique saturé et ramifié, contenant 10 atomes de carbone dans le groupement acide, en une proportion de 10 à 60% en poids, calculés par rapport au poids du mélange des monomères complet, et
(e) d'esters alkyliques de l'acide méthacrylique et/ou de l'acide acrylique, dont le groupe alkyle contient de 1 à 3 atomes de carbone, en une proportion de 15 à 50% en poids, calculés par rapport au poids du mélange des monomères complet,
la somme des proportions respectives des composants étant de 100%.

2. Interpolymères suivant la revendication 1, caractérisés en ce que le composant (a) est le (méth)acrylate d'hydroxyéthyle.

3. Interpolymères suivant la revendication 1, caractérisés en ce que le composant (b) est l'acide acrylique et/ou l'acide méthacrylique.

4. Interpolymères suivant la revendication 1, caractérisés en ce que, à titre de composant (c), on utilise des esters n-butyliques de l'acide acrylique et/ou de l'acide méthacrylique.

5. Interpolymères suivant la revendication 1, caractérisés en ce que, à titre de composant (d), on utilise un acide monocarboxylique tertiaire saturé en C₁₀.

6. Interpolymères suivant la revendication 1, caractérisés en ce que l'on choisit le composant (e) parmi l'acrylate de méthyle, le méthacrylate de méthyle, l'acrylate d'éthyle et le méthacrylate d'éthyle.

7. Interpolymères suivant la revendication 1, caractérisés en ce que les proportions d'esters hydroxyalkyliques de l'acide à insaturation éthylénique [composant (a)] et de l'acide à insaturation éthylénique [composant (b)] sont réglées dans la plage de 8 à 11% en poids et, de préférence, à environ 9% en poids et dans la plage de 4 à 8% en poids et, de préférence, à environ 6% en poids, respectivement, tandis que les proportions des composants (c), (d) et (e) peuvent varier dans les plages susmentionnées, tout en satisfaisant simultanément aux équations suivantes :
(i) y₃ = 62 X₁ - 60 X₂ + 134 X₃ + 265 X₁.X₂ + 728 X₁.X₃ + 946 X₂.X₃ - 1924 X₁.X₂.X₃;
(ii) Y₄ = 348 X₁ + 56 X₂ - 10 X₃ - 765 X₁.X₂ - 640 X₁.X₃ + 187 X₂.X₃ + 1372 X₁.X₂.X₃;
(iii) Y₅ = -30 X₁ + 38 X₂ + 335 X₃ - 275 X₁.X₂ + 22 X₁.X₃ - 837 X₂.X₃ + 4735 X₁.X₂.X₃;
où X₁ représente la fraction pondérale du composant (d), de préférence, du VeoVa 10 (marque de fabrique); X₂ représente la fraction pondérale du composant (c), de préférence, l'acrylate de butyle; X₃ représente la fraction pondérale du composant (e), de préférence, le méthacrylate de méthyle; et dans lesquelles Y₁ représente la stabilité au stockage de la suspension aqueuse d'interpolymères en jours et possédant une valeur d'au moins 42; Y₂ représente le degré de conversion en % en poids qui est d'au moins 99,5%; Y₃ représente la dureté König du film en s, possédant une valeur d'au moins 140; Y₄ représente la souplesse en 0,0115 kg/m (pouce.livre) et possédant une valeur d'au moins 25, et Y₅ représente la résistance à la méthyléthylcétone en db.frottements et possédant une valeur d'au moins 100.

8. Interpolymères suivant la revendication 1, caractérisés en ce qu'on peut les obtenir à partir de compositions de comonomères comprenant :
(a) de 4 à 13% en poids d'acrylate d'hydroxyéthyle,
(b) de 4 à 11% en poids d'acide acrylique,
(c) de 10 à 15% en poids d'acrylate de butyle,
(d) de 40 à 43% en poids de VeoVa 10, et
(e) de 30 à 35% en poids de méthacrylate de méthyle, la proportion totale atteignant 100%.

9. Procédé de préparation d'interpolymères suivant l'une quelconque des revendications 1 à 8, comprenant la polymérisation en solution radicalaire des composants monomériques (a) à (e) à une température qui varie de 110 à 150°C dans un système à base de solvant organique miscible à l'eau et inerte.

10. Procédé suivant la revendication 9, caractérisé en ce que : (1) on part d'une charge de réacteur initiale du solvant en une proportion de 10 à 20% en poids du poids total des composants monomériques, dans laquelle on a dissous une proportion de 0 à 15% en poids de la quantité totale du composant (d), et de 0 à 10% en poids de la quantité totale de chacun des composants monomériques (a), (b), (c) et (e); (2) on chauffe la charge du réacteur jusqu'à la température réactionnelle souhaitée, et (3) à cette température sensiblement constante, on ajoute graduellement les composants monomériques résiduels et une proportion d'amorceur de 1 à 5% en poids et, de préférence, de 2 à 4,5% en poids, calculés par rapport au poids total des composants, en l'espace de 3 à 5 heures et, de préférence, de 3,5 à 4,5 heures, opération suivie d'une post-réaction pendant 1 à 3 heures et, de préférence, 2 heures.

11. Utilisation des interpolymères suivant l'une quelconque des revendications 1 à 8 dans des compositions de revêtement aqueuses durcissables contenant un agent de durcissement ou de réticulation et dans des compositions de revêtement durcies obtenues par le thermodurcissement des compositions de revêtement aqueuses durcissables.
